# EUROPEAN PATENT SPECIFICATION

(11) **EP 1 342 566 B1**
(45) Date of publication and mention of the grant of the patent: **15.02.2006**
(21) Application number: 01980991.2
(22) Date of filing: 07.11.2001
(51) Int. Cl.: B32B 27/00, B32B 27/32, B32B 27/10

(54) **LAMINATE FOR PACKAGING MATERIAL**
LAMINAT FÜR VERPACKUNGSMATERIAL
LAMINE POUR MATERIAU D'EMBALLAGE

(30) Priority: 09.11.2000 JP 2000342276
(43) Date of publication of application: 10.09.2003
(73) Proprietor: Tetra Laval Holdings & Finance S.A., 1009 Pully (CH)
(72) Inventor: FRISK, Peter, c/o NIHON TETRA PAK K.K., Tokyo 102-8544 (JP); OGITA, Hiroaki, c/o NIHON TETRA PAK K.K., Tokyo 102-8544 (JP); ANDERSSON, Thorbjorn, S-240 17 Sodra Sandby (SE); LETH, Ib, S-273 64 Kavlinge (SE)
(74) Representative: Müller, Frank Peter
(86) International application number: PCT/JP2001/009708
(87) International publication number: WO 2002/038378

(56) References cited:
- EP-A2- 0 972 634
- JP-A- 8 134 794
- JP-A- 2000 062 109
- PATENT ABSTRACTS OF JAPAN vol. 2000, no. 05, 14 September 2000 (2000-09-14) & JP 2000 062109 A (DAINIPPON PRINTING CO LTD), 29 February 2000 (2000-02-29)
- PATENT ABSTRACTS OF JAPAN vol. 1996, no. 09, 30 September 1996 (1996-09-30) & JP 8 134794 A (MITSUI PETROCHEM IND LTD), 28 May 1996 (1996-05-28)

## Description

### Technical field

This invention relates to the laminate for packaging material. This invention relates to the laminate for packaging material suitable for packaging of liquids, such as liquid food, in more detail.

### Background technology

Conventionally, the laminate of the paper as a core and plastic films, such as polyethylene, polypropylene, polyester, and polyvinyl chloride, is used for the packaging material for liquid food etc.

In order to protect the liquid packed inside, barrier layers are usually prepared in the inside of the packaging material. For example, Patent Abstracts of Japan 2000, 062109 discloses a laminate for packaging material comprising an outer polyolefin resin layer, a paper layer, a polyolefin layer, a biaxially oriented plastic film and an innermost polyolefin resin layer. In case the packaging container is produced from the packaging material, in order to produce easily it, the easily it, the polyethylene with the comparatively better adhesiveness is generally used on the inside of the barrier layer.

In the packaging material, a packaging material laminated so that a plastic film become the outside of the paper layer does not provide a packaging container which shows excellent appearance. In particular, the look of the appearance turns worse with use of the packaging container. It is known from Patent Abstracts of Japan 1996, 08134794, to coat a paper with a cyclic olefimic emulsion to obtain scratching resistance and glossy appearance.

The treatment at high temperature, e.g. a folding at more than 70 degrees C, autoclave treatment and retort processing by temperature of at least 130 degrees C, autoclave treatment and retort processing by temperature of at least 130 degrees C leads the above-mentioned problems because the hardness, glossy, transparency, scratch resistance, heat resistance and moisture-resistance of the plastic films with handling of the package. Therefore, the packaging materials of which no properties deteriorate in spite of the handling of the package container are needed.

### Disclosure Of Invention

The purpose of this invention is offering the packaging material for liquid foods from which a packaging container having the good appearance and a packaging container having no leakage of the liquid food contents, in the packaging material which comprises a paper layer, an inner barrier layer and a further inner polyethylene layer.
The inventors improved the above-mentioned problems in order to attain the purpose of this invention. Accordingly, in packaging materials which have the paper layer, the inner barrier layer including an aluminium foil and the further inner polyethylene layer, a polycycloolefin copolymer containing layer is provided on the outside of the paper layer.
In addition, in this invention, the "inner layer" means the layer of the side which contacts the content when packaging the content to be filled using the laminate for packaging material, and the "outer layer" means the layer by the side of opposite. Moreover, the "inside" means the side near the content to be filled when packaging the content to be filled. The "outside" means the opposite side to the inside.

The summary of this invention is the laminate for packaging material which comprises at least the paper layer, the polycycloolefin copolymer containing layer which is provided on the outside of the paper layer, the barrier layer including an aluminium foil which is provided on the inside of the paper layer and the further inner polyethylene layer.

The laminate for packaging material of this invention is characterized by the polycycloolefin copolymer-containing layer is directly in contact with the outer surface of the paper layer.

In the preferable laminate for packaging material of this invention, the laminate has a polyethylene layer provided between the paper layer and the barrier layer including an aluminium foil.

In the preferable laminate for packaging material of this invention, the laminate has a thermo-plastic resin layer provided between the paper layer and the polycycloolefin copolymer-containing layer.

In the preferable laminate for packaging material of this invention, the thermo-plastic resin layer has a metal-deposited layer on the surface of the thermo-plastic resin layer.

In the preferable laminate for packaging material of this invention, a thermo-plastic resin layer is provided on the outside of surface of the polycycloolefin copolymer-containing layer.

In the preferable laminate for packaging material of this invention, the polycycloolefin copolymer includes copolymer with polycycloolefin and ethylene or alpha-olefin.

In the preferable laminate for packaging material of this invention, the polyethylene layer includes linear low density polyethylene manufactured by using the metallocene catalyst.

In the preferable laminate for packaging material of this invention, the thermo-plastic resin layer includes polyolefin.

### Preferred Embodiments Of Invention

The laminate (Laminate 1) for packaging material of this invention comprises at least the paper layer, the polycycloolefin copolymer containing layer which is provided on the outside of the paper layer, the barrier layer including an aluminium foil which is provided on the inside of the paper layer and the further inner polyethylene layer.

The usual fibrous material and paper materials having the weight of 50 - 350 (g/m²) can be used for the paper layer.

The polycycloolefin copolymer of the polycycloolefin copolymer containing layer of the Laminate 1 of this invention includes copolymer with polycycloolefin and ethylene or alpha-olefin, copolymer of polycycloolefin and mono- cyclo- olefin, copolymer of polycycloolefin and non-conjugated diene and etc. The copolymer of polycycloolefin and ethylene or alpha-olefin, especially the copolymer of polycycloolefin and ethylene are desirable.

The polycycloolefin includes bicyclo [2, 2, 1]-hept-2-ene and the derivative, tetracyclo [4, 4, 0, 1^{2,5}, 1⁷_{,} ¹⁰]-3-dodecen and the derivative, hexacyclo [6, 6, 1, 1^{3,6}, 1^{10,13}, 0^{2,7}, 0 ^{9,14}]-4-heptadecene and the derivative, octacyclo [8, 8, 0, 1 ^{2,9}, 1 ^{4,7}, 1 ^{11,10}, 1 ^{13, 16}, 0 ^{3,8}, 0 ^{12, 17}]-5-docosene and the derivative, pentacyclo [6, 6, 1, 1^{3,6}, 0 ^{2,7}, 0 ^{9,14}]-4-hexadecene and the derivative, pentacyclo [6, 5, 1, 1^{3,6},0^{2,7},0^{9,13}]-4-pentadecene and the derivative, heptacyclo [8, 7, 0, 1^{2,9}, 1^{4,7}, 1^{11, 17}, 0 ^{3,8}, 0^{12,15}]-5-heneicosene and the derivative, heptacyclo [8, 8, 0, 1^{2,9}, 1^{4, 7}, 1^{11, 16}, 0^{3,8}, 0 ^{12, 17}]-5-heneicosene and the derivative, tricyclo [4, 4, 0, 1^{2,5}]-3-undecene and the derivative, tricyclo [4, 3, 0, 1 ^{2, 5}]-3-decene and the derivative, pentacyclo [6, 5, 1, 1 ^{3, 6}, 0 ^{2, 7}, 0 ^{9, 13}]-4, 10-penladecadiene and the derivative, pentacyclo [4, 7, 0, 1 ^{2, 5}, 0 ^{8, 13}, 1 ^{9, 12}]-3-pentadecene and the derivative, heptacyclo [7, 8, 0, 1 ^{3,5}, 1 ^{2, 7}, 1^{10,17}, 0 ^{11,16}, 0 ^{12,15}]-4-eicosen and the derivative, nonacyclo [10, 1, 1 ^{4,7}, 0 ^{3,8}, 0 ^{2, 10}, 0 ^{12, 21}, 1 ^{13, 20}, 0 ^{14, 19}, 0 ^{15, 19}]-5-pentacecone, the derivative and, etc.

The alpha olefin copolymerized with the polycycloolefin includes propylene, 1-butene, 1-pentene, 1-hexene, 4-methyl-1-pentene, 1-heptene, 1-octene, 1-nonene, 1-decene and etc. The monocycloolefin includes cyclobutene, cyclopentene, cyclohexene, 3-methyl cyclohexene, cycto octane and etc. The nonconjugated diene includes 1,4-hexadiene, 4-methyl -1,4-hexadiene, 1,7-octadiene and etc. One or more of the olefins copolymerized with the polycycloolefin are used.

The copolymerization of the polycycloolefin and the above-mentioned olefins is usually performed at minus 50 - plus 150 degree C temperatures under existence or nonexistence of the organic solvent and etc., using the combination catalyst of transition-metal compounds, e.g. titanium, zirconium, vanadium, and hafnium, and organoaluminium compounds.
The polycycloolefin copolymer obtained according to the above-mentioned copolymerization is the random copolymer of the polycycloolefin and the above-mentioned olefins. The preferable random copolymer has 30 to 95 mole % of a polymer structural unit derived from the polycycloolefin, especially 40 to 80 mole %.

The polycycloolefin copolymer containing layer includes the pure polycycloolefin copolymer or the mixture of the polycycloolefin copolymer with the other material. The material being mixable with the polycycloolefin copolymer includes preferable polyolefin e.g. polyethylene, polypropylene, ethylene-propylen-copolymer and polybutene-1. The preferable polyethylene includes high-density polyethylene, middle-density polyethylene, low density polyethylene, linear low density polyethylene, linear low density polyethylene (mLLDPE) obtained by using the metallocene catalysis and etc.
The molecular weight distribution of mLLDPE is as narrow as 2-4 at the weight average molecular weight/number average molecular weight. It's density is 0.900 - 0.925 g/cm³, desirably 0.900 - 0.915 g/cm³, more desirably 0.905 - 0.925 g/cm³. In the mLLDPE, melt flow index (MFI: 190 degree C, 2.16 (kg of loads) are 10-20 (g /10 minutes).

The mLLDPE is desirably manufactured under existence of the metallocene catalyst by copolymerizing ethylene and comonomer of 4-8 carbon alpha olefin, more desirably comonomer of six or more carbon alpha olefin, e.g. 1-hexene, 4-methyl-1-pentene, 1-heptene, and 1-octene.

The above-mentioned metallocene catalyst includes metallocene of a compound having a structure of transition metals, e.g. titanium, zirconium, and hafnium, sandwiched by unsaturated cyclic compound containing pi-electron cyclopentadienyl group or substituted cyclopentadienyl group, a catalyst combined the metallocene with co-catalysts, e.g. aluminum compounds, e.g. alkyl alminoxane, the alkyl aluminium, aluminum halide, and alkyl aluminum halide.

The polycycloolefin copolymer may be mixed with the other material, preferable polyolefin. The polycycloolefin contain more than 50%, especially more than 60% wt. in the mixture. The usual thickness of the polycycloolefin copolymer-containing layer is 10-100 micrometer.

The barrier layer including an aluminium foil at the inside of the paper layer of the laminate (Laminate 1) for the packaging material of this invention is the barrier material monolayer or the multilayer structure containing barrier material. The barrier material includes an aluminum foil. The multilayer structure containing the barrier material includes polyethylene film/ aluminum foil, adhesive polyethylene/ silicon-oxide vapor deposited polyethylene terephthalate biaxis-stretch film (/adhesive), polyethylene film/ adhesive/ ethylene-vinyl alcohol copolymer film/ adhesive, nylon resin film/ adhesive and etc. The thickness of the barrier layer is usually 5-25 micrometers.

The polyethylene layer provided on the inside of the barrier layer includes high-density polyethylene, middle-density polyethylene, low density polyethylene, mLLDPE, the mixture and etc. Since the polyethylene layer and the polycycloolefin copolymer-containing layer are adhesive, the laminate is preferable to a packaging container having sealing between the polycycloolefin copolymer containing outermost layer and the polyethylene innermost layer. One of the preferable polyethylenes is adhesive mLLDPE because of improvement of the sealing. The thickness of the polyethylene layer is usually 20-50 micrometer.

The laminate (Laminate 2) of this invention has the polyethylene layer between the barrier layer and the paper layer of Laminate 1. The polyethylene includes high-density polyethylene, middle-density polyethylene, low density polyethylene, linear low density polyethylene and etc. The polyethylene layer is monolayer or multilayer. The thickness of the polyethylene layer is usually 10-50 micrometer.

In the preferable laminate (Laminates 2 and 4) of this invention, a monolayer or a multilayer may be provided between the paper layer and the polycycloolefin copolymer-containing layer. The monolayer or the multilayer includes thermoplastic resin layer.

The thermoplastic resin includes polyolefin, nylon, polyester, polyvinyl chloride, etc. The polyolefin includes polyethylene, polypropylene, ethylene-propylene copolymer, polybutene-1 and etc. The nylon includes nylon 6, nylon 6-6, nylon -11, nylon -12 and etc. The polyester includes polyethylene terephthalate, polybutylene terephthalate and etc. The polyolefin, especially polyethylene is one of the desirable thermoplastic resins. The polyethylene includes high-density polyethylene, middle-density polyethylene, low density polyethylene and etc. The polyethylene layer contains monolayer and multilayer of one or more thermoplastic resins. The thickness of the polyethylene layer is usually 5-200 micrometer.

In the preferable laminate (Laminates 5 and 6) of this invention, the thermoplastic resin layer has the metal deposited layer on the surface of the thermoplastic resin layer. The metal of the metal-deposited layer includes aluminum, gold, silver and etc, preferably aluminum. The thickness of the metal-deposited layer is 200-600 Angstrom (20-60 nm), preferably 300-550 Angstrom (30-55 nm).

A method of depositing the metal layer on one side of the thermoplastic resin layer includes usually steps of using a batch type vacuum evaporation device and a continuous vacuum evaporation device, heating and vaporizing pure metal, e.g. aluminum with high frequency induction heating, resistance heating and electron beam heating at temperature of 1,300 - 1,450 degrees C in the vacuum degree of 10-100 (mPa).

Before forming a metal-deposited layer, an anchor coat may be provide on the surface of the thermoplastic resin layer. In the anchor coat processing, an anchor coat agent including nitrocelluloses, polyurethanes, polyesters, vinyl chloride-vinyl acetate copolymer, acrylic copolymer or these mixtures is applied on the surface of the thermoplastic resin layer and a solvent in the anchor coat agent is removed by drying. The thickness of the anchor coat layer by anchor coat processing is preferable 0.05-1 micrometer. In addition, the corona discharge processing can be taken in the surface of the thermoplastic resin layer instead to the anchor coat processing.

In the preferable laminate (Laminates 7 and 12) of this invention, a monolayer or a multilayer may be provided on the outside of the polycycloolefin copolymer-containing layer. The monolayer or the multilayer includes thermoplastic resin layer. The thermoplastic resin includes polyolefin, nylon, polyester, polyvinyl chloride, etc. The polyolefin includes polyethylene, polypropylene, ethylene-propylene copolymer, polybutene-1 and etc. The nylon includes nylon 6, nylon 6-6, nylon -11, nylon -12 and etc. The polyester includes polyethylene terephthalate, polybutylene terephthalate and etc.

The polyolefin, especially polyethylene is one of the desirable thermoplastic resins. The polyethylene includes high-density polyethylene, middle-density polyethylene, low density polyethylene and etc. The polyethylene layer contains monolayer and multilayer of one or more thermoplastic resins. The thickness of the polyethylene layer is usually 5-200 micrometer.

Furthermore, the laminates of this invention may have a printing layer. The printing layer is provided on the inside of the polycycloolefin copolymer containing layer or between of the polycycloolefin copolymer containing layer and the paper layer in the Laminates 1 and 2, on the outside or the inside of the thermoplastic resin layer in the Laminates 3-6, on the outside or the inside of the inner thermoplastic resin layer or the outer thermoplastic resin layer in the Laminates 7-12. The printing layer is formed with the usual ink by the usual printing, if needed.

The laminate for packaging material of this invention is the laminate by methods. The method to bind and laminate the layers includes a method to adhere the layers with adhesives, a method to laminate thermo-fusionabible layers by thermofusion, a method to simultaneously extrusion-mold the layers, a method to combine the above methods and the conventional method to manufacture the laminate.

From the laminate for packaging material of this invention, the packaging container having a shape of the rectangular parallelepipeds, e.g. the Tetra Brik (trademark) type, the rectangular parallelepipeds with a gable-top, e.g. the container containing one litter cow's milk, cube, cylinder form, prism, Tetra Prisma (trademark) that has sectional octagon in the body and sectional square at the top and the bottom, pouch, and conventionally well-known shapes.

### Example

Hereafter, the example describes this invention in detail.

### (Example 1)

The laminate of this invention was manufactured by laminating a film (25 micrometers) of polycycloolefin copolymer (60 mole % polycycloolefin component, 40 mole % ethylene component), Kraft paper (weight: 220 g/m³), an aluminum foil (7 micrometers), a film (20 micrometers) of mLLDPE with density 0.915 g/cm³, MI:14 (g/10 minutes) with an adhesive.

### (Example 2)

The laminate of this invention was manufactured by laminating a film (25 micrometers) of a mixture of the 70 wt.% polycycloolefin copolymer used in Example 1 and 30 wt.% low density polyethylene, Kraft paper (weight: 200 g/m³), low density polyethylene film (20 micrometer), an aluminum foil (7 micrometers), the film (20 micrometers) of mLLDPE used in Example 1 with an adhesive.

### (Example 3)

The laminate of this invention was manufactured by laminating the film (25 micrometers) used in Example 2 of the mixture of the polycycloolefin copolymer and low density polyethylene, low density polyethylene film (20 micrometer), Kraft paper (weight: 180 g/m³), an aluminum foil (7 micrometers), the film (20 micrometers) of mLLDPE used in Example 1 with an adhesive.

### (Example 4)

The complex laminate 1 was obtained by laminating polypropylene, a mixture of the 80 wt.% polycycloolefin copolymer used in Example 1 and 20 wt.% low density polyethylene and polypropylene with extrusion coating. The complex laminate 1 had a polypropylene film (25 micrometer), a mixture film (25 micrometer) of the polycycloolefin copolymer and low density polyethylene and a polypropylene (20 micrometer). The laminate of this invention was manufactured by laminating the complex laminate 1 with low density polyethylene film (20 micrometer), Kraft paper (weight: 200 g/m³), an aluminum foil (7 micrometers) and the film of mLLDPE used in Example 1, with an adhesive.

### (Example 5)

The complex laminate 2 was obtained by laminating low density polyethylene, a mixture of the 70 wt.% polycycloolefin copolymer used in Example 1 and 30 wt.% low density polyethylene and linear low density polyethylene with extrusion coating. The complex laminate 2 had a low density polyethylene film (20 micrometer), a mixture film (25 micrometer) of the polycycloolefin copolymer and low density polyethylene and a linear low density polyethylene (20 micrometer). Aluminum layer (45 nm) was deposited on the anchor coated linear low density polyethylene surface of the complex laminate 2 at temperature of 1350 degrees C. The laminate of this invention was manufactured by laminating the aluminum deposited complex laminate 2 with low density polyethylene film (20 micrometer), Kraft paper (weight: 210 g/m³), an aluminum foil (7 micrometers) and the mLLDPE film (20 micrometer) with an adhesive.

### (Comparative Example 1)

The laminate was manufactured in the same way as Example 1 except using a biaxial stretched polypropylene film (20 micrometer) instead of the film of the mixture of polycycloolefin copolymer and low density polyethylene used in Example 2.

### (Comparative Example 2)

The laminate was manufactured in the same way as Example 2 except using a biaxial stretched polyethylene terephthalate film (12 micrometer) instead of the film of the mixture of polycycloolefin copolymer and low density polyethylene used in Example 2.

Using the laminate manufactured by Examples 1-5 and Comparative Examples 1 and 2, the brick shape liquid food container containing 200ml were produced, were filled with the water, and the performance of the containers were estimated by the following ways: The result of the estimation is shown in Table 1. In the Table 1, the mark "⊚" means "excellent, the mark "○" means "good" and the mark "Δ" means "fair".

### Appearance Examination

Regarding the water newly filled packaging containers and the two weeks-safekeeping (at 55 degrees C) packages, the appearances (gross and transparency) were visually observed.

**Table**

| | Examples | | | | | Comparative Examples | |
|---|---|---|---|---|---|---|---|
| | 1 | 2 | 3 | 4 | 5 | 1 | 2 |
| Appearance Examination | | | | | | | |
| Gloss | | | | | | | |
| Newly | ⊚ | ○ | ○ | ○ | ○ | ⊚ | ○ |
| Safekeeping (55C) | ⊚ | ○ | ○ | ○ | ○ | ○ | Δ |
| Transparency | | | | | | | |
| Newly | ⊚ | ○ | ○ | ○ | Δ | ⊚ | ○ |
| Safekeeping (55C) | ⊚ | ○ | ○ | ○ | Δ | ○ | Δ |

As the result of the Table is shown, the appearances of the packaging containers from the Comparative Examples deteriorated due to the high temperature safekeeping. On the other hand, the appearances of the packaging containers from the Examples did not change.

### Advantage

According to the container formed by using the laminate of this invention, stiffness, gloss, transparency, scratch resistance, heat-resisting property, moisture resistance, etc. are improved by the polycycloolefin-copolymer containing layer on the outside of the paper layer, over the plastics used conventionally. Thus, the aspect and appearance of the container are good.

The polycycloolefin-copolymer containing layer has the good compatibility with the polyethylene layer in the inner layer of the laminate of this invention. Accordingly, in case the container is formed by overlapping between the outermost layer of polycycloolefin-copolymer containing layer and the innermost layer of the polyethylene layer. The container obtained shows the good sealability.

In the container formed by using the laminate of this invention, the container comprising the polycycloolefin-copolymer containing layer has the good integrity and good appearance.

Since the polycycloolefin-copolymer containing layer is provided on the outermost layer of the container, the container has excellent appearance and good gloss. The design and colors from the ink layer of the container are clearly shown with the excellent appearance. Especially, the metal gloss of the metal deposited layer of the container is shown.

The polycycloolefin-copolymer containing layer is excellent in the heat-resisting property. Even if it is the about 130-degree C high temperature, it does not cause any injury and any thermal hysteresis inside the container wall. Thus, it is the most suitable for the packaging container for autoclave treatment and retort processing.

Since the outside of the container is protected in the polycycloolefin-copolymer containing layer, the leakage from the container does not occur under the high temperature.

Due to the linear low-density-polyethylene layer obtained by the polymerization in the metallocene catalyst of the innermost layer of the laminate of this invention, in case the container is formed by overlapping between the outermost layer of polycycloolefin-copolymer containing layer and the innermost layer of the polyethylene layer, the container obtained shows the good sealability.

In the linear low-density-polyethylene layer obtained by the polymerization by the metallocene catalyst of the innermost layer, when the container is formed by using the laminate of this invention, it excels unexpectedly in the openability, as well as the sealability.

The polycycloolefin copolymer layer of the container formed from the laminate of this invention has the very good humidity barrier, and the humidity barrier of the container is improved. The oxygen scavenging performance of the barrier layer in the inside of the polycycloolefin-copolymer layer can be protected. Perfect barrier ability can be added to the container with conjointly the oxygen barrier of the barrier layer in the inside the paper layer.

### Availability on Industry

The container of this invention is used as the containers, e.g. liquid foods, e.g. cow's milks, juices, coffees, and alcoholic beverages.

## Claims

1. A paper laminate for packaging material comprising at least a paper layer, a polycyloolefin copolymer containing layer provided on the outside of the paper layer, a barrier layer including an aluminium foil provided on the inside of the paper layer and a further inner polyethylene layer.

2. The paper laminate for packaging material of Claim 1, **characterized in that** the polycycloolefin copolymer containing layer is in contact with the outer surface of the paper layer.

3. The paper laminate for packaging material of one of the preceding claims, **characterized in that** the laminate has a polyethylene layer provided between the paper layer and the barrier layer.

4. The paper laminate for packaging material of one of the preceding claims, **characterized in that** the laminate has a thermo-plastic resin layer provided between the paper layer and the polycycloolefin copolymer-containing layer.

5. The paper laminate for packaging material of Claim 4, **characterized in that** the thermo-plastic resin layer has a metal-deposited layer on the surface of the thermo-plastic resin layer.

6. The paper laminate for packaging material of one of the preceding claims, **characterized in that** a thermo-plastic resin layer is provided on the outside surface of the polycycloolefin copolymer-containg layer.

7. The paper laminate for packaging material of one of the preceding claims, **characterized in that** the polycycloolefin copolymer includes a copolymer with polycycloolefin and ethylene or alpha-olefin.

8. The paper laminate for packaging material of one of the preceding claims, **characterized in that** the polyethylene layer includes linear low density polyethylene manufactured by using the metallocene catalyst.

9. The paper laminate for packaging material of one of claims 4 to 6, **characterized in that** the thermo-plastic resin layer includes polyolefin.

## Patentansprüche

1. Papierlaminat für Verpackungsmaterial, welches mindestens eine Papierlage, eine ein Polycyclo-Olefin-Kopolymer enthaltende Lage, die auf der Außenseite der Papierlage vorgesehen ist, eine Sperrschicht mit einer Aluminiumfolie, die auf der Innenseite der Papierlage vorgesehen ist, und eine weitere innen liegende Polyethylen-Schicht aufweist.

2. Papierlaminat für Verpackungsmaterial nach Anspruch 1, **dadurch gekennzeichnet, dass** die ein Polycyclo-Olefin-Kopolymer enthaltende Lage mit der Außenseite der Papierlage in Berührung steht.

3. Papierlaminat für Verpackungsmaterial nach einem der vorhergehenden Ansprüche, **dadurch gekennzeichnet, dass** das Laminat eine Polyethylen-Schicht aufweist, die zwischen der Papierlage und der Sperrschicht vorgesehen ist.

4. Papierlaminat für Verpackungsmaterial nach einem der vorhergehenden Ansprüche, **dadurch gekennzeichnet, dass** das Laminat eine Schicht aus thermoplastischem Kunststoff aufweist, die zwischen der Papierlage und der ein Polycyclo-Olefin-Kopolymer enthaltenden Lage vorgesehen ist.

5. Papierlaminat für Verpackungsmaterial nach Anspruch 4, **dadurch gekennzeichnet, dass** die Schicht aus thermoplastischem Kunststoff eine metallische aufgebrachte Schicht aufweist, die auf der Oberfläche der Lage aus thermoplastischem Kunststoff aufgebracht ist.

6. Papierlaminat für Verpackungsmaterial nach einem der vorhergehenden Ansprüche 1, **dadurch gekennzeichnet, dass** auf der Außenseite der ein Polycyclo-Olefin-Kopolymer enthaltenden Lage eine Schicht aus thermoplastischem Kunststoff vorgesehen ist.

7. Papierlaminat für Verpackungsmaterial nach einem der vorhergehenden Ansprüche, **dadurch gekennzeichnet, dass** das Polycyclo-Olefin-Kopolymer ein Kopolymer mit Polycyclo-Olefin und Ethylen oder Alpha-Olefin enthält.

8. Papierlaminat für Verpackungsmaterial nach einem der vorhergehenden Ansprüche, **dadurch gekennzeichnet, dass** die Polyethylen-Schicht ein lineares Polyethylen geringer Dichte enthält, welches unter Verwendung eines Metallocen-Katalysators hergestellt wurde.

9. Papierlaminat für Verpackungsmaterial nach einem der Ansprüche 4 bis 6, **dadurch gekennzeichnet, dass** die Schicht aus thermoplastischem Kunststoff Polyolefin enthält.

## Revendications

1. Papier stratifié pour matériau d'emballage, qui comprend au moins une couche en papier, une couche renfermant un copolymère à polycyclo oléfine, qui est disposée sur la face extérieure de la couche en papier, une couche de barrage à une feuille en aluminium, qui est disposée sur la face intérieure de ladite couche en papier, et une autre couche en polyéthylène intérieure

2. Papier stratifié pour matériau d'emballage selon la revendication 1, **caractérisé en ce que** ladite couche renfermant un copolymère à polycyclo oléfine se trouve en contact avec la surface extérieure de ladite couche en papier.

3. Papier stratifié pour matériau d'emballage selon une quelconque des revendications précédentes, **caractérisé en ce que** le stratifié comprend une couche en polyéthylène, qui est disposée entre ladite couche en papier et ladite couche de barrage.

4. Papier stratifié pour matériau d'emballage selon une quelconque des revendications précédentes, **caractérisé en ce que** le stratifié comprend une couche en résine thermoplastique, qui est disposée entre ladite couche en papier et la couche renfermant un copolymère à polycyclo oléfine.

5. Papier stratifié pour matériau d'emballage selon la revendication 4, **caractérisé en ce que** ladite couche en résine thermoplastique comprend une couche métallique déposée, qui est déposée sur la face de ladite couche en résine thermoplastique.

6. Papier stratifié pour matériau d'emballage selon une quelconque des revendications précédentes 1, **caractérisé en ce qu'**une couche en résine thermoplastique est disposée sur la face extérieure de ladite couche renfermant un copolymère à polycyclo oléfine.

7. Papier stratifié pour matériau d'emballage selon une quelconque des revendications précédentes, **caractérisé en ce que** le copolymère à polycyclo oléfine contient un copolymère à polycyclo oléfine et éthylène ou alpha oléfine.

8. Papier stratifié pour matériau d'emballage selon une quelconque des revendications précédentes, **caractérisé en ce que** ladite couche en polyéthylène contient un polyéthylène linéaire de faible densité, qui était produit moyennant un catalyseur métallocène.

9. Papier stratifié pour matériau d'emballage selon une quelconque des revendications 4 à 6, **caractérisé en ce que** ladite couche en résine thermoplastique contient de la polyoléfine.
